# EUROPEAN PATENT SPECIFICATION

(11) **EP 4 432 441 B1**
(45) Date of publication and mention of the grant of the patent: **14.01.2026**
(21) Application number: 22898875.4
(22) Date of filing: 31.10.2022
(51) Int. Cl.: H01M 50/24, H01M 50/383, H01M 50/358, H01M 50/204

(54) **BATTERY MODULE**
BATTERIEMODUL
MODULE DE BATTERIE

(30) Priority: 26.11.2021 KR 20210165065
(43) Date of publication of application: 18.09.2024
(73) Proprietor: LG Energy Solution, Ltd., Seoul 07335 (KR)
(72) Inventor: WON, Seongyeon, Daejeon 34122 (KR); KIM, Tae Geun, Daejeon 34122 (KR); KANG, Yunhyeok, Daejeon 34122 (KR); LEE, Young Bin, Daejeon 34122 (KR)
(74) Representative: Plasseraud IP
(86) International application number: PCT/KR2022/016837
(87) International publication number: WO 2023/096193

(56) References cited:
- EP-A1- 3 866 252
- CN-U- 209 658 275
- CN-U- 209 896 150
- CN-U- 209 896 150
- KR-A- 20210 063 942
- KR-A- 20210 065 268
- KR-A- 20210 065 268
- KR-A- 20210 092 039
- US-A1- 2021 344 074

## Description

### [Technical Field]

This application claims priority to and the benefit of Korean Patent Application No. 10-2021-0165065, filed on November 26, 2021.

The present disclosure relates to a battery module, and in particular, a battery module in which a pair of blocking ribs protruding toward a bus bar plate is disposed at an insulation cover, to minimize the movement of high-temperature particles and gases toward a terminal of the bus bar plate, and an elastic gasket is disposed to fill a gap between an opening of the insulation cover and the terminal of the bus bar plate elastically, such that the discharge of the high-temperature particles and gases through the gap is minimized.

### [Background Art]

At a time when more and more public attention is drawn to environmental issues, the global society has tried to reduce carbon emissions. As part of an effort to reduce carbon emissions, electric vehicles powered by electricity have been widely used rather than vehicles that are provided with a combustion engine and powered by fossil fuels.

Against this backdrop, there is a growing demand for a secondary battery that is mounted in an electric vehicle and used to store electricity. Additionally, coupled with increased importance of a personal mobile device such as a smart phone, a tablet PC and the like in our daily life, there is an increase in demand for a secondary battery for a mobile device to supply electricity to the mobile device.

Increasing demand for a secondary battery facilitates growing demand for research and development into a secondary battery.

In this context, demand for a multi module-structured battery pack increases, and in the multi module-structured battery pack, a battery module, where a plurality of secondary batteries connects in series/in parallel to enhance the capacity and efficiency of a secondary battery, is collected.

In the case where the plurality of battery cells connect in series/ in parallel to constitute a battery pack, a battery module comprised of at least one of battery cells is constituted, and other components are ordinarily added to the battery pack with at least one of battery modules, to constitute a battery pack.

Further, heat is necessarily generated by a battery cell stack at a time of supply of power, and unless the heat generation is controlled effectively, the efficiency of the battery cell stack deteriorates rapidly, causing thermal runaway. In some cases, there can be a fire or an explosion.

In particular, the inner pressure of the battery module increases rapidly due to high-temperature particles and gases that are produced at a time of thermal runaway.

In the structure of a battery module of related arts, high-temperature particles and gases generated at a time of thermal runaway are released outward through a gap formed between a terminal provided at the upper end of a bus bar plate or a terminal provided at the bus bar plate, which is relatively vulnerable to the inner pressure, and an insulation cover, causing a fire.

In relation to this, a battery module is disclosed in CN Patent Publication No. 202110308925, and has a structure in which a plurality of heat insulation plates is disposed between a bus bar plate and a battery cell stack, to protect the bus bar plate from high-temperature particles and gases that are generated at a time of thermal runaway.

However, in the battery module according to the above-mentioned document, the plurality of heat insulation plates is segmentally disposed side by side, along the left-right direction, failing to prevent the leakage of the high-temperature gases effectively.

Furthermore, in the battery module according to the above-mentioned document, the high-temperature particles can move among the segmented heat insulation plates, failing to prevent the particles of the battery module from leaking outward effectively.
US2021344074A1 discloses a battery module. EP3866252A1 discloses a battery module and a battery pack comprising the same.

### [Description of Invention]

### [Technical Problems]

The first objective of the present disclosure is to provide a battery module in which a pair of blocking ribs protruding toward a bus bar plate is disposed at an insulation cover, to minimize the movement of high-temperature particles and gases toward a terminal of the bus bar plate.

The second objective of the present disclosure is to provide a battery module in which an elastic gasket is disposed to fill a gap between an opening of the insulation cover and the terminal of the bus bar plate elastically, such that the discharge of the high-temperature particles and gases through the gap is minimized.

The third objective of the present disclosure is to provide a battery module in which a sheet member exhibiting thermal resistance is disposed between a battery cell stack and the bus bar plate, and entirely covers an upper surface and a front surface of the battery cell stack along the widthwise direction of the battery cell stack, to minimize damage to the bus bar plate, caused by high-temperature particles and gases, and to suppress the leakage of the particles and the gases.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

A battery module of one embodiment comprises a battery cell stack being formed by stacking a plurality of battery cells; a plurality of electrode leads being disposed in one end portion of the battery cell stack and connecting the plurality of battery cells electrically; a bus bar plate connecting the plurality of electrode leads electrically and having at least one of terminals on one surface thereof; and an insulation cover having an opening that is disposed to face one surface of the bus bar plate and exposes at least one of the terminals to the outside at least partially, and the insulation cover comprises at least one of blocking ribs protruding toward one surface of the bus bar plate.

At least one of the blocking ribs extends from a left edge to a right edge of the insulation cover, across the insulation cover, along a left-right direction.

At least one of the blocking ribs is provided in a position lower than a position of the opening with respect to an up-down direction.

The blocking ribs comprise a first blocking rib being provided in a position lower than the position of the opening with respect to the up-down direction; and a second blocking rib being provided in a position lower than the position of the first blocking rib with respect to the up-down direction.

The first blocking rib and the second blocking rib may be disposed side by side.

The first blocking rib and the second blocking rib are respectively integrated with the insulation cover.

The front end portion of each of the first blocking rib and the second blocking rib connects to the insulation cover integrally, and the rear end portion of each of the first blocking rib and the second blocking rib may contact the bus bar plate.

The battery module may further comprise an elastic gasket that elastically fills a gap formed between the opening and at least one of the terminals.

The elastic gasket may be made of rubber exhibiting electric insulation and thermal resistance.

The battery module may further comprise at least one of sheet members being fixed to the other surface of the bus bar plate, which faces the battery cell stack, and exhibiting thermal resistance and electric insulation.

The sheet member may comprise a perpendicular part being attached to the other surface of the bus bar plate and being elongated in an up-down direction; and a horizontal part connecting to an upper end portion of the perpendicular part integrally and being elongated in a direction where the horizontal part becomes farther from the other surface of the bus bar plate, and the horizontal part may be disposed to cover an upper surface of the battery cell stack at least partially, and the perpendicular part may be disposed to cover a front surface of the battery cell stack at least partially.

A width of the perpendicular part of the sheet member in a left-right direction may be greater than or the same as a width of the front surface of the battery cell stack in the left-right direction.

A width of the horizontal part of the sheet member in the left-right direction may be greater than or the same as a width of the upper surface of the battery cell stack in a horizontal direction.

### [Advantageous Effects]

In a battery module according to the present disclosure, a pair of blocking ribs protruding toward a bus bar plate is disposed at an insulation cover, to minimize the movement of high-temperature particles and gases toward a terminal of the bus bar plate.

In the battery module, an elastic gasket is disposed to fill a gap between an opening of the insulation cover and the terminal of the bus bar plate elastically, such that the discharge of the high-temperature particles and gases through the gap is minimized.

In the battery module, a sheet member exhibiting thermal resistance is disposed between a battery cell stack and the bus bar plate, and entirely covers an upper surface and a front surface of the battery cell stack with respect to the widthwise direction of the battery cell stack, to minimize damage to the bus bar plate, caused by high-temperature particles and gases, and to suppress the leakage of the particles and the gases.

Specific effects are described along with the above-described effects in the section of detailed description.

### [Brief Description of Drawings]

FIG. 1 is an exploded perspective view showing a battery module of one embodiment.
FIG. 2 is a perspective view showing a first insulation cover in FIG. 1.
FIG. 3 is a front perspective view showing the battery module in FIG. 1.
FIG. 4 is a cross-sectional view of FIG. 3.
FIG. 5 is a front perspective view showing a first gasket in FIG. 4.
FIG. 6 is a partial enlarged view and a perspective view for describing a seat member provided in one embodiment of FIG. 1.

### [Description of reference numerals]

1: Battery module 100: Battery cell stack 100a: Upper surface 100b: Front surface 110: Battery cell 111: Electrode lead 200: Frame 210: Lower frame 211: Bottom frame 212: Side frame 220: Upper frame 300: Insulation cover 310: First insulation cover 320: Second insulation cover 400: Sheet member 410: First sheet member 420: Second sheet member 500: Bus bar plate 500a: Bus bar 510: First bus bar plate 520: Second bus bar plate

### [Detailed Description of Exemplary Embodiments]

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

Hereafter, the subject matter of the present disclosure is described with reference to the drawings that show the configuration of a battery module 1 of one embodiment.

### [Entire structure of battery module]

Hereafter, the entire structure of the battery module 1 of one embodiment is described with reference to the accompanying drawings.

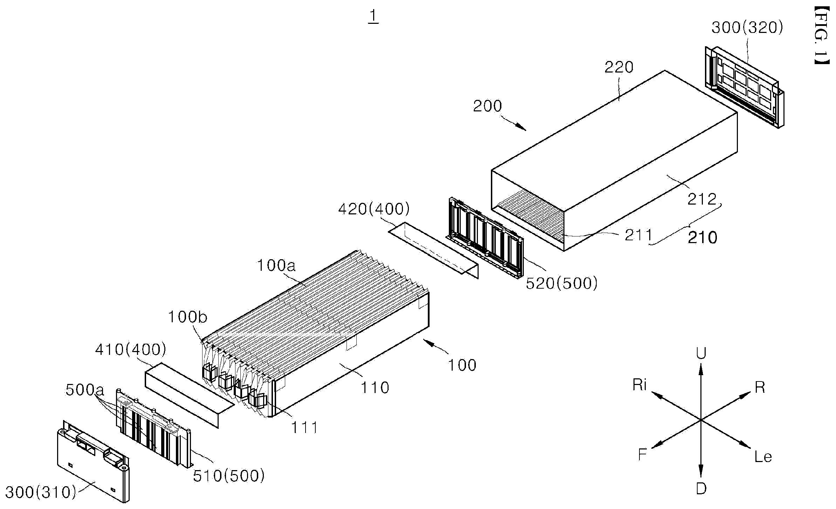

FIG. 1 is an exploded perspective view showing a battery module 1 of one embodiment.

Referring to FIG. 1, the battery module 1 of one embodiment may have a configuration in which a plurality of battery cells 110 is accommodated in a case or a housing that is comprised of a lower frame 210 and an upper frame 220.

The plurality of battery cells may constitute a battery cell stack 100 in which the plurality of battery cells are arranged in close contact with each other, in the state of being stacked.

The case or the housing of the battery module 1 may comprise a lower frame 210 surrounding the battery cell stack 100's lower surface and both lateral surfaces, an upper frame 220 being disposed at an upper surface side 110a of the battery cell stack 100, and a pair of insulation covers 400 being disposed to face an electrode lead 111 of the battery cell stack 100.

As illustrated, the lower frame 210 may comprise a bottom frame 211 constituting the bottom surface of the housing or the case, and a pair of side frames 212 constituting two lateral walls of the housing or the case, for example. It is preferable to integrally form the bottom frame 211 and the pair of side frames 212, in a way that a metal plate having predetermined strength is pressed.

The upper frame 220 covers an upper surface 100a of the battery cell stack 100, and like the lower frame 210, may be made of a metal plate having predetermined strength.

The upper frame 220 may be assembled to the lower frame 210 in a way that the upper frame 220 is coupled to upper end portions 211 of the pair of side frames 212.

Bottom surfaces 301 of the end portions at both sides of the upper frame 220, and the upper end portions of the side frames 212 may be coupled based on laser-welding.

A rectangular pouch-type battery cell may be used as the plurality of battery cells 110, and two-way battery cells where an anode lead and a cathode lead constituting the electrode lead 111 protrude in an opposite direction, may be used as the battery cells 110.

The electrode leads 111 may electrically connect with a bus bar plate 500, such that the plurality of battery cells 110 connects in series or in parallel, through a bus bar 500a, depending on a desired output and capacity of the battery module 1. At this time, the bus bar plate 500, as illustrated, may comprise a first bus bar plate 510 disposed at the front of the battery cell stack 100, and a second bus bar plate 520 disposed at the rear of the battery cell stack 100.

At least one of the first bus bar plate 510 or the second bus bar plate 520 may be provided with at least one of terminals 511, 512, 513 for supplying power to the outside. Following FIG. 1, the first bus bar plate 510 disposed at the front of the battery cell stack 100 is provided with a plurality of terminals 511, 512, 513, for example. At least one of the terminals 511, 512, 513 may comprise first, second and third terminals 511, 512, 513 that are exposed to the outside, through an opening 3103d of a first insulation cover 310, at least partially, and are spaced from one another, as described hereafter. Hereafter, the first, second and third terminals 511, 512, 513 are disposed at the first bus bar plate 510, for example, but not limited.

Depending on the specifications of a product to be applied, the battery cell stack 100 may further comprise a cartridge accommodating the battery cell 110, a buffer member, or a cooling member and the like.

A pair of sheet members 400 which is disposed to face the electrode lead 111, and a pair of insulation covers 300 may be disposed on an open front surface and an open rear surface of the frame 200.

The insulation cover 300 may be coupled to the frame in the state where the battery cell stack 100 is mounted in the frame 200, and the upper frame 220 is coupled to the lower frame 210.

It is preferable to couple the first insulation cover 310 to the open front surface of the frame 200 and to couple a second insulation cover 320 to the open rear surface of the frame 200.

The first insulation cover 310 and the second insulation cover 320 may be made of a material that has electric insulation and thermal resistance while having predetermined mechanical strength. A material for the insulation cover may be a thermoplastic synthetic resin exhibiting resistance against heat of 600 °C or greater. The insulation cover may be formed based on injection-molding to readily embody a specific shape. For example, it is preferable to manufacture the insulation cover with a wholly aromatic polyimide-based material, based on plastic injection molding.

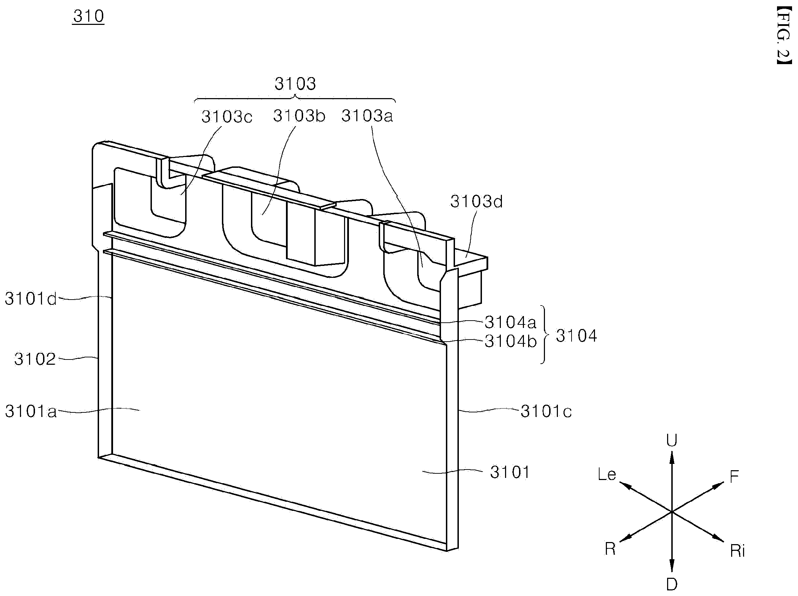

At this time, at least one of blocking ribs (3104 in FIG. 2) may be provided at the first insulation cover 310 of the battery module 1 of one embodiment, and minimizes the upward (U-direction) movement of high-temperature particles and gases that are generated at a time of thermal runaway of the battery cell stack 100, as described hereafter. A detailed configuration of the first insulation cover 310 provided with a blocking rib is described hereafter, with reference to the drawings following FIG. 2.

Additionally, the sheet member 400, as illustrated in FIG. 1, may be disposed between the upper end of the first insulation cover 310 and a front surface 100b of the battery cell stack 100, and prevent damage to the first insulation cover 310, which is caused by high-temperature particles and gases that are generated at a time of thermal runaway of the battery cell stack 100.

For the same reason, the sheet member 400 may be disposed between the upper end of the second insulation cover 320 and the rear surface of the battery cell stack 100, and prevent damage to the second insulation cover 320.

Hereafter, for convenience of description, the sheet member disposed at the first insulation cover 310 side is referred to as a first sheet member 420, and the sheet member disposed at the second insulation cover 320 side is referred to as a second sheet member 420, to distinguish the sheet members.

As described hereafter, the first sheet member 410 and the second sheet member 420 may be continuously formed to entirely cover the front edge and the rear edge of the upper surface 100a of the battery cell stack 100, along the left-right direction (Le-Ri direction), and as illustrated, may be respectively attached to the first insulation cover 310 and the second insulation cover 320, in a way that the first sheet member 410 and the second sheet member 420 bend in a "L" shape.

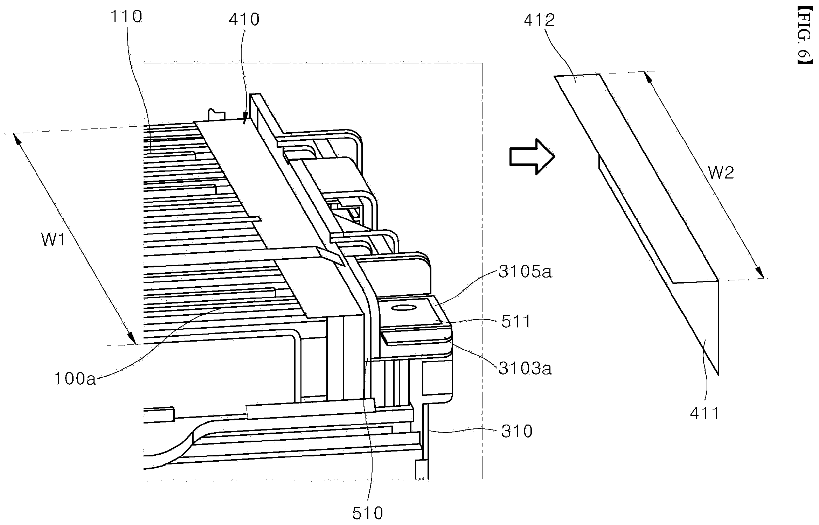

A detailed configuration of the sheet member 400 is described hereafter, with reference to FIG. 6.

Though not illustrated in FIG. 1, a first end plate and a second end plate, which are formed into a metal plate, may be respectively provided on an outer surface 3101b of the first insulation cover 310 and the outer surface of the second insulation cover 320, to protect the first insulation cover 310 and the second insulation cover 320 and improve the strength of the first insulation cover 310 and the second insulation cover 320.

### [Detailed structure of first insulation cover and gasket in one embodiment]

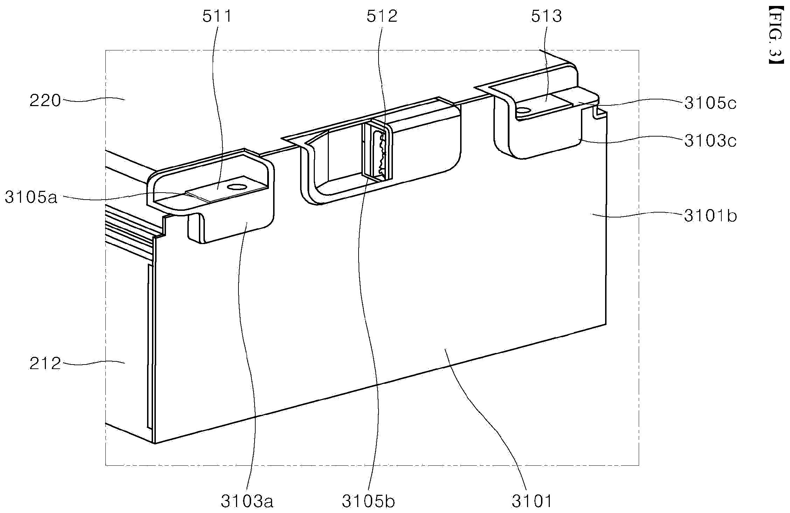

FIGS. 2 and 3 are perspective views showing the first insulation cover 310 provided at the battery module 1 of one embodiment.

Referring to FIGS. 2 and 3, the first insulation cover 310 of the battery module 1 of one embodiment may comprise a cover main body 3101 having a flat plate shape.

The cover main body 3101, as described above, is coupled to the open front surface of the frame 200 and closes the front surface of the frame 200.

An edge rib 3102 may be continuously formed at a right edge 3101c, the lower edge and a left edge 3101d of the cover main body 3101, and protrude toward the frame 200 and enhance adhesion to the frame 200.

A terminal coupling part 3103, in which the above-described first, second and third terminals 511, 512, 513 are respectively accommodated, may be provided at the upper end of the outer surface 3101b of the cover main body 3101.

For example, the terminal coupling part 3103 may comprise first, second, third terminal coupling parts 3103a, 3103b, 3103c to accommodate the first, second and third terminals 511, 512, 513 respectively and separately, and the first, second, third terminal coupling parts 3103a, 3103b, 3103c may protrude forward from the cover main body 3101. As illustrated, the first, second, third terminal coupling parts 3103a, 3103b, 3103c may be spaced from one another as far as possible, to prevent interference among them.

An opening 3103d may be provided respectively at the first, second and third terminal coupling parts 3103a, 3103b, 3103c, to allow the first, second and third terminals 511, 512, 513 to be exposed outward at least partially.

A plurality of gaskets 3105a, 3105b, 3105c may be provided at the openings 3103d of the first, second and third terminal coupling parts 3103a, 3103b, 3103c at which the first, second and third terminals 511, 512, 513 are disposed respectively, to fill a gap formed between the opening 3103d and each of the terminals 511, 512, 513 elastically.

The gaskets 3105a, 3105b, 3105c may be made of rubber having predetermined elasticity and exhibiting electric insulation and thermal resistance. It is preferable to form the gaskets 3105a, 3105b, 3105c with a fluoropolymer-based synthetic rubber.

For convenience of description, a gasket provided at the first terminal coupling part 3103a is referred to as a first gasket 3105a, a gasket provided at the second terminal coupling part 3103b is referred to as a second gasket 3105b, and a gasket provided at the third terminal coupling part 3103c is referred to as a third gasket 3105c, among the plurality of gaskets 3105a, 3105b, 3105c.

The first, second and third gaskets 3105a, 3105b, 3105c may help to minimize high-temperature particles and gases, which are generated at a time of thermal runaway of the battery cell stack 100, from escaping outward through the gap between the opening 3103d and each of the terminals 511, 512, 513.

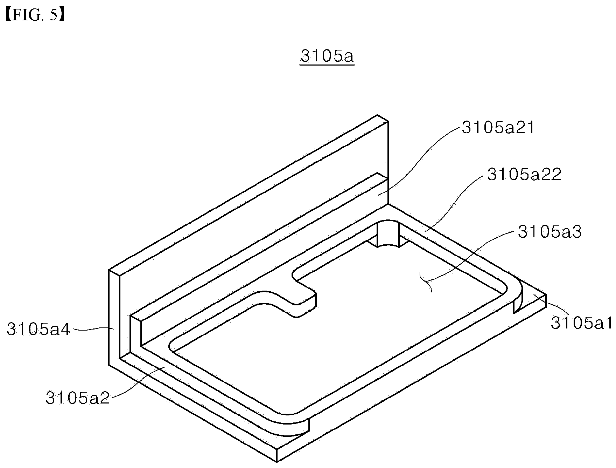

A detailed configuration of the first, second and third gaskets 3105a, 3105b, 3105c is described hereafter, with reference to FIG. 5.

As described above, at least one of blocking ribs 3104 may be provided on an inner surface 3101a of the cover main body 3101 as a means to minimize the upward (U-direction) movement of the high-temperature particles and gases that are generated at a time of thermal runaway of the battery cell stack 100.

Specifically, at least one of the blocking ribs 3104 serves as a barrier that blocks a space formed between a bus bar plate and an inner surface 3101a of the first insulation cover 310 and prevents high-temperature particles and gases from moving in the upward direction (U-direction) toward the opening 3103d of the first insulation cover 310.

To prevent the high-temperature particles and gases from moving in the upward direction (U-direction) toward the opening 3103d of the first insulation cover 310, the blocking rib 3104 may be disposed in a position lower than that of the opening 3103d with respect to the up-down direction (U-D direction).

In the illustrative embodiment of FIG. 2, the blocking rib 3104 comprises a first blocking rib 3104a and a second blocking rib 3104b that are spaced from each other in the up-down direction (U-D direction), and disposed side by side, but is not limited. Hereafter, the blocking rib 3104 comprising the first blocking rib 3104a and the second blocking rib 3104b is described with reference to the illustrative embodiment.

For convenience of description, with respect to the up-down direction (U-D direction), a blocking rib, which is provided in a position lower than that of the opening 3103d, at the lower side of the opening 3103d, is referred to as a first blocking rib 3104a, and a blocking rib, which is provided in a position lower than that of the first blocking rib 3104a, at the lower side of the first blocking rib 3104a, is referred to as a second blocking rib 3104b.

As described above, the first blocking rib 3104a and the second blocking rib 3104b serve as a barrier that blocks a propagation path P in which high-temperature particles and gases move in the upward direction (U-direction) toward the opening 3103d of the first insulation cover 310. To serve as a barrier described above, the first blocking rib 3104a and the second blocking rib 3104b protrude from the inner surface 3101a of the first insulation cover 310 toward the first bus bar plate 510.

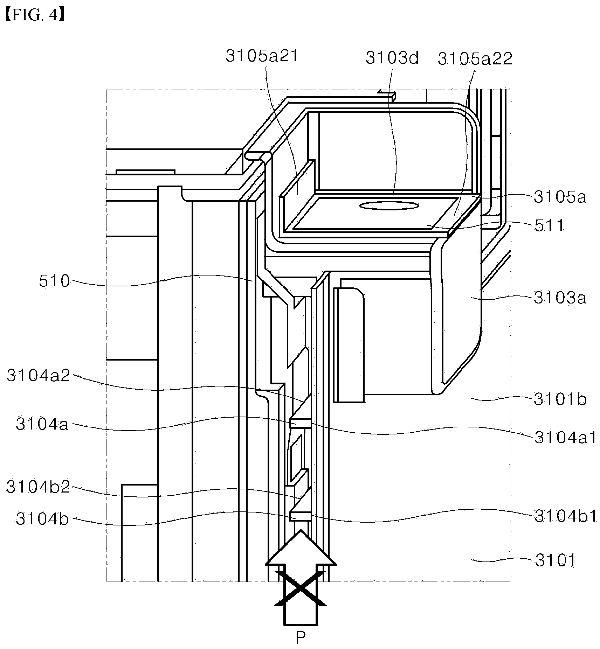

As illustrated in FIG. 4, a rear end portion 3104a2 of the first blocking rib 3104a, and a rear end portion 3104b2 of the second blocking rib 3104b may preferably protrude in the front-rear direction (F-R direction) up to a position where the rear end portions contact the bus bar plate.

Additionally, the first blocking rib 3104a and the second blocking rib 3104b may be elongated across the cover main body 3101 along the left-right direction (Le-Ri direction), to entirely blocks a space formed between the first bus bar plate 510 and the inner surface 3101a of the first insulation cover 310. For example, the first blocking rib 3104a and the second blocking rib 3104b may be continuously elongated from the right edge 3101c of the cover main body 3101 of the first insulation cover 310 to the left edge 3101d thereof.

Further, the first blocking rib 3104a and the second blocking rib 3104b may be integrated to the first insulation cover 310. Accordingly, a front end portion 3104a1 of the first blocking rib 3104a and a front end portion 3104b1 of the second blocking rib 3104b may be integrated on the inner surface 3101a of the cover main body 3101, and the left end portions and the right end portions of the first blocking rib 3104a and the second blocking rib 3104b may be integrated with the edge rib 3102 of the first insulation cover 310.

Thus, the insulation cover may have a simpler structure than the structure in the case where the first blocking rib 3104a and the second blocking rib 3104b are provided separately, ensuring a reduction in manufacturing costs. Further, the insulation cover has resistance against heat of 600 °C or greater. Accordingly, in the embodiment, serving as a barrier to high-temperature particles and preventing the leakage of vent gases, the blocking rib may be designed to serve mainly as a barrier to high-temperature particles. Certainly, the blocking rib may also perform the function of preventing the leakage of vented gases.

The first blocking rib 3104a and the second blocking rib 3104b may minimize the upward (U-direction) movement of high-temperature particles and gases, but as described above, some of the particles and gases are likely to leak outward through the gap formed between the first insulation cover 310 and each of the terminals 511, 512, 513.

The first, second and third gaskets 3105a, 3105b, 3105c fill the gap formed between the first insulation cover 310 and each of the terminals 511, 512, 513 elastically, to suppress the leakage of high-temperature particles and gases having passed by the first blocking rib 3104a and the second blocking rib 3104b, as described above.

The positions or sizes of the first, second and third gaskets 3105a, 3105b, 3105c may differ, but in general, may be applied in almost the same way. Hereafter, the configuration of the first gasket 3105a illustrated in FIG. 5 is described. Unless described otherwise, the configuration of the first gasket 3105a may be applied to the configurations of the second gasket 3105b and the third gasket 3105c in the same way.

FIG. 5 shows a detailed configuration of the first gasket 3105a, for example. Referring to FIG. 5, the first gasket 3105a may comprise a base part 3105a1 that is formed into a rectangular frame the inside of which is open.

The base part 3105a1 is a portion that is held, coupled and fixed inside the opening 3103d of the first insulation cover 310, and as the pressure in the battery module 1 increases, supports the first gasket 3105a such that the first gasket 3105a does not escape outward.

Accordingly, the base part 3105a1 may have an outer shape that is greater than that of the opening 3103d.

Further, an opening coupling part 3105a2 may be provided on one surface of the base part 3105a1, and have a shape corresponding to the gap formed between the first insulation cover 310 and each of the terminals 511, 512, 513.

The opening coupling part 3105a2 substantially fills the gap formed between the first insulation cover 310 and each of the terminals 511, 512, 513. The outer circumferential surface of the opening coupling part 3105a2 may have a shape corresponding to the inner circumferential surface of the opening 3103d. The inner circumferential surface of the opening coupling part 3105a2 may have a shape corresponding to the shape of the outer circumferential surface of a portion of the terminal 511, which is exposed outward through the opening 3103d. At this time, the opening coupling part 3105a2 may have a width greater than that of the gap, such that the opening coupling part 3105a2 is elastically pressed and coupled in the state where the opening coupling part 3105a2 is placed in the gap.

As illustrated, the opening coupling part 3105a2 is formed into an "L" shape in which a perpendicular extension part 3105a21 and a horizontal extension part 3105a22 connect. Accordingly, the "L" shape of the opening coupling part 3105a2 corresponds to the "L" shape of the opening 3103d. A penetration hole 3105a3, which has a size corresponding to the size of the exterior of the first terminal 511, may be formed in the horizontal extension part of the opening coupling part 3105a2, to expose the first terminal 511 to the outside at least partially. The inner circumferential surface of the penetration hole 3105a3 may have a shape corresponding to the shape of the outer circumferential surface of a portion of the terminal 511 which is exposed outward through the opening 3103d.

Further, a fixation part 3105a4 may be provided in the end portion of one side of the base part 3105a1. The fixation part 3105a4 is a portion that is elongated in a direction different from the direction of the base part 3105a1, preferably, in a direction perpendicular to the direction of the base part 3105a1, and entirely fixes the first gasket 3105a to the first terminal coupling part 3103a. The fixation part 3105a4 connects to the perpendicular extension part 3105a21 of the opening coupling part 3105a2, and has a greater surface area than the perpendicular extension part 3105a21. The fixation part 3105a4 may be pressed and interposed between the first insulation cover 310 and the first bus bar plate 510 in the front-rear direction.

That is, a gap between the terminal of the bus bar plate, exposed through the opening of the insulation cover, and the inner circumferential surface of the opening of the insulation cover is closed by the opening coupling part of the gasket. The opening coupling part is not necessarily formed into a two-dimensional plane. If the opening of the insulation cover has a three-dimensional shape, the opening coupling part may have a three-dimensional shape having a perpendicular extension part 3105a21 and a horizontal extension part 3105a22, like the first gasket 3105a.

The gasket may be provided with an expansion interposition part that has a step between itself and the opening coupling part and has a greater surface area than the opening coupling part. In the case of a first gasket 3105a, the base part 3105a1 and the fixation part 3105a4 may correspond to the expansion interposition part. Accordingly, the expansion interposition part is not necessarily formed into a two-dimensional plane and may have a three-dimensional shape corresponding to the shape of the opening coupling part.

The outer circumferential surface of the opening coupling part may contact the inner circumferential surface defining the opening of the insulation cover, and the surface of the expansion interposition part may contact the inner surface of the insulation cover.

The gasket 3105a, 3105b, 3105c may be made of thermally resistant rubber, and serve as an encapsulant that prevents the leakage of vented gases. The gasket may exhibit resistance against heat of 200 to 300 °C. In the embodiment, serving as a barrier to high-temperature particles and preventing the leakage of vented gases, the gasket may be designed mainly to prevent the leakage of vented gases. Certainly, the gasket may also serve as a barrier to high-temperature particles.

### [Detailed configuration of sheet member]

Hereafter, a detailed configuration of the sheet member 400 provided in the battery module 1 of one embodiment is described with reference to FIG. 6.

As described above, the sheet member 400 may comprise a first sheet member 410 disposed between the upper end of the first bus bar plate 510 and the battery cell stack 100, and a second sheet member 420 disposed between the upper end of the second bus bar plate 520 and the battery cell stack 100.

The positions or sizes of the first sheet member 410 and the second sheet member 420 may differ, but in general, may be applied in almost the same way. Hereafter, the configuration of the first sheet member 410 illustrated in FIG. 6 is described. Unless described otherwise, the configuration of the first sheet member 410 may be applied to the configuration of the second sheet member 420 in the same way.

As illustrated in FIG. 6, the first sheet member 410 may comprise a perpendicular part 411 attached to the first bus bar plate 510 and elongated in the up-down direction (U-D direction), and a horizontal part 412 elongated in a direction where the horizontal part 412 becomes farther from the first bus bar plate 510.

The perpendicular part 411 covers the upper surface 100a of the battery cell stack 100, and the perpendicular part 411 covers the front surface 100b of the battery cell stack 100.

For example, the perpendicular part 411 and the horizontal part 412 may be integrally formed, and formed in a way that a plate-shaped base material bends in a "L" shape.

As described above, the first sheet member 410 prevents damage to the first insulation cover 310, which is caused by high-temperature particles and gases generated from the battery cell stack 100.

To this end, the first sheet member 410 needs to entirely cover an edge that is formed as the front surface 100b and the upper surface 100b of the battery cell stack 100 meet, along the left-right direction (Le-Ri direction).

At this time, the widths W2 of the horizontal part 412 and the perpendicular part 411 of the first sheet member 410 in the left-right direction (Le-Ri direction) may be greater than or the same as the widths W1 of the battery cell stack 100 in the left-right direction (Le-Ri direction).

Additionally, at least, the horizontal part 412 of the first sheet member 410 needs to be formed continuously along the left-right direction (Le-Ri direction), to prevent high-temperature particles and gases from moving through the first sheet member 410. To this end, a space between the end portion of the left side and the end portion of the right side of the horizontal part 412 may be kept close entirely.

That is, a slit, or an open hole and the like may not be provided at all between the end portion of the left side and the end portion of the right side of the horizontal part 412.

The first sheet member 410 may be fixed to the inner surface of the first bus bar plate 510. Specifically, the perpendicular part 411 of the first sheet member 410 may be interposed between the front surface 100b of the battery cell stack 100 and the first bus bar plate 510, in the front-rear direction. It is preferable to firmly attach the perpendicular part 411 of the first sheet member 410 to the inner surface of the first bus bar plate 510, with a means of adhesion or a means of attachment. The horizontal part 412 of the first sheet member 410 may be interposed between the upper surface 100a of the battery cell stack 100 and the upper frame 220, in the up-down direction.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure.

## Claims

1. A battery module (100), comprising:
a battery cell stack (100a) formed by stacking a plurality of battery cells (111);
a plurality of electrode leads (200) disposed on one end of the battery cell stack and connecting the plurality of battery cells electrically;
a bus bar plate electrically connecting the plurality of electrode leads and having at least one terminal on one side thereof; and
an insulation cover (310) disposed to face the one side of the bus bar plate, and having an opening (3103d) that exposes the at least one terminal to an outside at least partially, wherein the insulation cover comprises at least one blocking rib (3104) protruding toward the one side of the bus bar plate,
wherein the battery module is **characterized in that** the at least one blocking rib serves as a barrier that blocks a space formed between a bus bar plate and an inner surface (3101a) of the insulation cover and prevents high-temperature particles and gases from moving in the upward direction (U-direction) toward the opening of the insulation cover, wherein the at least one blocking rib extends from a left edge of the insulation cover to a right edge of the insulation cover, across the insulation cover, along a left-right direction, wherein the at least one blocking rib is provided in a position lower than a position of the opening with respect to an up-down direction, wherein the at least one blocking rib comprises:
a first blocking rib (3104a) being provided in a position lower than the position of the opening with respect to the up-down direction; and
a second blocking rib (3104b) being provided in a position lower than the position of the first blocking rib with respect to the up-down direction,
wherein the first blocking rib and the second blocking rib are respectively integrated with the insulation cover,
wherein a front end portion (3104a1, 3104b1) of each of the first blocking rib and the second blocking rib integrally connects to the insulation cover, and a rear end portion (3104a2, 3104b2) of each of the first blocking rib and the second blocking rib contacts the bus bar plate.

2. The battery module of claim 1, wherein the first blocking rib and the second blocking rib are parallel to each other.

3. The battery module of claim 1, wherein the battery module further comprises an elastic gasket (3105a, 3105b, 3105c) that elastically fills a gap formed between the opening and the at least one terminal.

4. The battery module of claim 3, wherein the elastic gasket is made of rubber exhibiting electric insulation and thermal resistance.

5. The battery module of claim 3, wherein the elastic gasket is provided with an opening coupling part (3105a2) closing a gap between the terminal of the bus bar plate, exposed through the opening of the insulation cover, and an inner circumferential surface of the opening, and an expansion interposition part having a step between itself and the opening coupling part, and having a greater surface area than the opening coupling part,
a surface of the expansion interposition part contacts an inner surface of the insulation cover, and
the opening coupling part has a penetration hole (3105a3) having a shape corresponding to a shape of the terminal of the bus bar plate, which is exposed through the opening of the insulation cover.

6. The battery module of claim 1 or 3, wherein the battery module further comprises at least one sheet member (410) being fixed to other side of the bus bar plate, which faces the battery cell stack, and exhibiting thermal resistance and electric insulation.

7. The battery module of claim 6, wherein the sheet member comprises:
a perpendicular part (411) attached to the other side of the bus bar plate, and extending in an up-down direction; and
a horizontal part (412) connected to an upper end of the perpendicular part integrally, and
extending in a direction where the horizontal part becomes farther from the other surface of the bus bar plate,
wherein the horizontal part is disposed to cover an upper side of the battery cell stack at least partially, and the perpendicular part is disposed to cover a front side of the battery cell stack at least partially.

8. The battery module of claim 7, wherein a width of the perpendicular part in a left-right direction is greater than or the same as a width of the front side of the battery cell stack in the left-right direction.

9. The battery module of claim 7, wherein a width of the horizontal part in a left-right direction is greater than or the same as a width of the upper side of the battery cell stack in a horizontal direction.

## Patentansprüche

1. Batteriemodul (100), umfassend:
einen Batteriezellenstapel (100a), welcher durch Stapeln einer Mehrzahl von Batteriezellen (111) gebildet ist;
eine Mehrzahl von Elektrodenleitungen (200), welche an einem Ende des Batteriezellenstapels angeordnet sind und die Mehrzahl von Batteriezellen elektrisch verbinden;
eine Sammelschienenplatte, welche die Mehrzahl von Elektrodenleitungen elektrisch verbindet und wenigstens einen Anschluss an einer Seite davon aufweist; und
eine Isolierungsabdeckung (310), welche angeordnet ist, um der einen Seite der Sammelschienenplatte zugewandt zu sein, und welche eine Öffnung (3103d) aufweist, welche den wenigstens einen Anschluss wenigstens teilweise zu einer Außenseite exponiert, wobei die Isolierungsabdeckung wenigstens eine Blockierrippe (3104) umfasst, welche in Richtung der einen Seite der Sammelschienenplatte hervorsteht,
wobei das Batteriemodul **dadurch gekennzeichnet ist, dass** die wenigstens eine Blockierrippe als eine Barriere dient, welche einen Raum blockiert, welcher zwischen einer Sammelschienenplatte und einer inneren Fläche (3101a) der Isolierungsabdeckung gebildet ist, und welche Hochtemperaturpartikel und Gase davon abhält, sich in der Nach-Oben-Richtung (U-Richtung) in Richtung der Öffnung der Isolierungsabdeckung zu bewegen, wobei sich die wenigstens eine Blockierrippe entlang einer Links-Rechts-Richtung von einem linken Rand der Isolierungsabdeckung über die Isolierungsabdeckung zu einem rechten Rand der Isolierungsabdeckung erstreckt, wobei die wenigstens eine Blockierrippe in einer Position bereitgestellt ist, welche in Bezug auf eine Oben-Unten-Richtung niedriger als eine Position der Öffnung ist, wobei die wenigstens eine Blockierrippe umfasst:
eine erste Blockierrippe (3104a), welche in einer Position bereitgestellt ist, welche in Bezug auf die Oben-Unten-Richtung niedriger als die Öffnung ist; und
eine zweite Blockierrippe (3104b), welche in einer Position bereitgestellt ist, welche in Bezug auf die Oben-Unten-Richtung niedriger als die erste Blockierrippe ist;
wobei die erste Blockierrippe und die zweite Blockierrippe jeweils in die Isolierungsabdeckung integriert sind,
wobei ein vorderer Endabschnitt (3104a1, 3104b1) jeder aus der ersten Blockierrippe und der zweiten Blockierrippe integral mit der Isolierungsabdeckung verbunden ist und ein hinterer Endabschnitt (3104a2, 3104b2) jeder aus der ersten Blockierrippe und der zweiten Blockierrippe die Sammelschienenplatte kontaktiert.

2. Batteriemodul nach Anspruch 1, wobei die erste Blockierrippe und die zweite Blockierrippe parallel zueinander sind.

3. Batteriemodul nach Anspruch 1, wobei das Batteriemodul ferner eine elastische Dichtung (3105a, 3105b, 3105c) umfasst, welche einen Spalt elastisch füllt, welcher zwischen der Öffnung und dem wenigstens einen Anschluss gebildet ist.

4. Batteriemodul nach Anspruch 3, wobei die elastische Dichtung aus Gummi hergestellt ist, welcher eine elektrische Isolierung und einen thermischen Widerstand darstellt.

5. Batteriemodul nach Anspruch 3, wobei die elastische Dichtung mit einem Öffnung-Kopplungsteil (3105a2), welcher einen Spalt zwischen dem Anschluss der Sammelschienenplatte, welcher durch die Öffnung der Isolierungsabdeckung exponiert ist, und einer inneren Umfangsfläche der Öffnung schließt, und einem Expansion-Zwischenpositionsteil bereitgestellt ist, welcher eine Stufe zwischen sich und dem Öffnung-Kopplungsteil aufweist, und welcher einen größeren Flächenbereich als der Öffnung-Kopplungsteil aufweist,
wobei eine Fläche des Expansion-Zwischenpositionsteils eine innere Fläche der Isolierungsabdeckung kontaktiert, und wobei der Öffnung-Kopplungsteil ein Eindringloch (3105a3) aufweist, welches eine Form aufweist, welche einer Form des Anschlusses der Sammelschienenplatte entspricht, welcher durch die Öffnung der Isolierungsabdeckung exponiert ist.

6. Batteriemodul nach Anspruch 1 oder 3, wobei das Batteriemodul ferner wenigstens ein Bahnelement (410) umfasst, welches an einer anderen Seite der Sammelschienenplatte fixiert ist, welche dem Batteriezellenstapel zugewandt ist, und welches einen thermischen Widerstand und eine elektrische Isolierung darstellt.

7. Batteriemodul nach Anspruch 6, wobei das Bahnelement umfasst:
einen senkrechten Teil (411), welcher an der anderen Seite der Sammelschienenplatte befestigt ist und welcher sich in einer Oben-Unten-Richtung erstreckt; und
einen horizontalen Teil (412), welcher mit einem oberen Ende des senkrechten Teils integral verbunden ist und welcher sich in einer Richtung erstreckt, in welcher der horizontale Teil weiter weg von der anderen Fläche der Sammelschienenplatte wird,
wobei der horizontale Teil angeordnet ist, um eine obere Seite des Batteriezellenstapels wenigstens teilweise abzudecken, und wobei der senkrechte Teil angeordnet ist, um eine vordere Seite des Batteriezellenstapels wenigstens teilweise abzudecken.

8. Batteriemodul nach Anspruch 7, wobei eine Breite des senkrechten Teils in einer Links-Rechts-Richtung größer als oder gleich wie eine Breite der vorderen Seite des Batteriezellenstapels in der Links-Rechts-Richtung ist.

9. Batteriemodul nach Anspruch 7, wobei eine Breite des horizontalen Teils in einer Links-Rechts-Richtung größer als oder gleich wie eine Breite der oberen Seite des Batteriezellenstapels in einer horizontalen Richtung ist.

## Revendications

1. Module de batterie (100), comprenant :
un empilement de cellules de batterie (100a) formé par empilement d'une pluralité de cellules de batterie (111) ;
une pluralité de fils d'électrode (200) disposés à une extrémité de l'empilement de cellules de batterie et connectant électriquement la pluralité de cellules de batterie ;
une plaque de barre omnibus connectant électriquement la pluralité de fils d'électrode et ayant au moins une borne sur un côté de celle-ci ; et
un couvercle d'isolation (310) disposé pour faire face audit côté de la plaque de barre omnibus, et ayant une ouverture (3103d) qui expose au moins partiellement l'au moins une borne à l'extérieur, dans lequel le couvercle d'isolation comprend au moins une nervure de blocage (3104) faisant saillie vers ledit côté de la plaque de barre omnibus, dans lequel le module de batterie est **caractérisé en ce que** l'au moins une nervure de blocage sert de barrière qui bloque un espace formé entre une plaque de barre omnibus et une surface intérieure (3101a) du couvercle d'isolation et empêche des particules et des gaz à haute température de se déplacer dans la direction ascendante (direction U) vers l'ouverture du couvercle d'isolation, dans lequel l'au moins une nervure de blocage s'étend d'un bord gauche du couvercle d'isolation à un bord droit du couvercle d'isolation, à travers le couvercle d'isolation, le long d'une direction gauche-droite, dans lequel l'au moins une nervure de blocage est ménagée dans une position plus basse qu'une position de l'ouverture par rapport à une direction haut-bas, dans lequel l'au moins une nervure de blocage comprend :
une première nervure de blocage (3104a) étant ménagée dans une position plus basse que la position de l'ouverture par rapport à la direction haut-bas ; et
une deuxième nervure de blocage (3104b) étant ménagée dans une position plus basse que la position de la première nervure de blocage par rapport à la direction haut-bas,
dans lequel la première nervure de blocage et la deuxième nervure de blocage sont respectivement intégrées au couvercle d'isolation,
dans lequel une partie d'extrémité avant (3104a1, 3104b1) de chacune de la première nervure de blocage et de la deuxième nervure de blocage est reliée d'un seul tenant au couvercle d'isolation, et une partie d'extrémité arrière (3104a2, 3104b2) de chacune de la première nervure de blocage et de la deuxième nervure de blocage entre en contact avec la plaque de barre omnibus.

2. Module de batterie selon la revendication 1, dans lequel la première nervure de blocage et la deuxième nervure de blocage sont parallèles l'une à l'autre.

3. Module de batterie selon la revendication 1, dans lequel le module de batterie comprend en outre un joint élastique (3105a, 3105b, 3105c) qui remplit de manière élastique un espace formé entre l'ouverture et l'au moins une borne.

4. Module de batterie selon la revendication 3, dans lequel le joint élastique est en caoutchouc présentant une isolation électrique et une résistance thermique.

5. Module de batterie selon la revendication 3, dans lequel le joint élastique est doté d'une partie de couplage d'ouverture (3105a2) fermant un espace entre la borne de la plaque de barre omnibus, exposée à travers l'ouverture du couvercle d'isolation, et une surface circonférentielle interne de l'ouverture, et une partie d'interposition d'expansion ayant un palier entre elle et la partie de couplage d'ouverture, et présentant une superficie plus grande que celle de la partie de couplage d'ouverture,
une surface de la partie d'interposition d'expansion entre en contact avec une surface interne du couvercle d'isolation, et la partie de couplage d'ouverture présente un trou de pénétration (3105a3) ayant une forme correspondant à une forme de la borne de la plaque de barre omnibus, qui est exposée à travers l'ouverture du couvercle d'isolation.

6. Module de batterie selon la revendication 1 ou 3, dans lequel le module de batterie comprend en outre au moins un élément en tôle (410) fixé à l'autre côté de la plaque de barre omnibus, qui fait face à l'empilement de cellules de batterie, et présentant une résistance thermique et une isolation électrique.

7. Module de batterie selon la revendication 6, dans lequel l'élément en tôle comprend :
une partie perpendiculaire (411) fixée à l'autre côté de la plaque de barre omnibus, et s'étendant dans une direction haut-bas ; et
une partie horizontale (412) reliée d'un seul tenant à une extrémité supérieure de la partie perpendiculaire, et s'étendant dans une direction où la partie horizontale devient plus éloignée de l'autre surface de la plaque de barre omnibus,
dans lequel la partie horizontale est disposée pour recouvrir au moins partiellement un côté supérieur de l'empilement de cellules de batterie, et la partie perpendiculaire est disposée pour recouvrir au moins partiellement un côté avant de l'empilement de cellules de batterie.

8. Module de batterie selon la revendication 7, dans lequel une largeur de la partie perpendiculaire dans la direction gauche-droite est supérieure ou égale à une largeur du côté avant de l'empilement de cellules de batterie dans la direction gauche-droite.

9. Module de batterie selon la revendication 7, dans lequel une largeur de la partie horizontale dans la direction gauche-droite est supérieure ou égale à une largeur du côté supérieur de l'empilement de cellules de batterie dans une direction horizontale.
